Europäisches Patentamt

European Patent Office

Office européen des brevets

(11) Publication number: **0 274 364 B1**

## EUROPEAN PATENT SPECIFICATION

(45) Date of publication of patent specification: **22.04.92**    (51) Int. Cl.⁵: **B29C 65/34**, B29C 67/16

(21) Application number: **87830443.5**

(22) Date of filing: **15.12.87**

(54) **A method for joining structural members with the use of fixing means of synthetic thermoplastic resin, a method for their manufacture, and a method of use.**

(30) Priority: **16.12.86 IT 6793686**

(43) Date of publication of application:
**13.07.88 Bulletin 88/28**

(45) Publication of the grant of the patent:
**22.04.92 Bulletin 92/17**

(84) Designated Contracting States:
**DE ES FR GB SE**

(56) References cited:
**DE-A- 2 851 612        DE-B- 1 143 629**
**FR-A- 1 288 882        FR-A- 1 454 869**
**FR-A- 1 493 562        GB-A- 2 065 027**
**US-A- 3 061 888        US-A- 3 507 938**
**US-A- 3 802 985        US-A- 3 923 580**
**US-A- 4 035 547        US-A- 4 376 005**

(73) Proprietor: **FIAT AUTO S.p.A.**
**Corso Giovanni Agnelli 200**
**I-10135 Torino(IT)**

(72) Inventor: **Da Re, Mario**
**Via Cristoforo Colombo, 9**
**I-10128 Torino(IT)**

(74) Representative: **Notaro, Giancarlo et al**
**c/o Jacobacci-Casetta & Perani S.p.A. Via**
**Alfieri, 17**
**I-10121 Torino(IT)**

## Description

The present invention relates to the assembly of structural members of plastics material either together or with metal components, particularly component parts of motor vehicle bodies.

More particularly, the invention concerns a method for joining structural members of the type mentioned above, provided with fixing means of thermoplastic material having respective surfaces intended to cooperate with each other with form coupling, in which the final joining is achieved by fusion of the thermoplastic material constituting the respective coupling surfaces.

The methods of assembly by fusion proposed until now have been shown to be difficult to carry out and in any case uneconomic.

Methods have also been proposed for joining structural members of plastics material with the use of adhesives, which harden more or less quickly, or screw members. These methods are not sufficiently reliable, however, and in any case cannot be adapted to equipment currently in use for the industrial assembly of conventional structural members by robotised welding.

FR-A-1 493 562 describes the welding of tubings by means of a sleeve which includes, in contact with the external surface of the tubings, bands of thermoplastic material including metal powder which allow to carry out heating by induction.

The metallic powder is incorporated in a film of material to be placed in a groove between two elements to be connected together. Such film does not have per se the function of joining two pieces. Such a function is achieved only as a result of the melting of the plastic material.

According to a different embodiment suggested by FR-A-1 493 562, the metal powder can be provided in the material of at least one of the tubings to be assembled and preferably concentrated at the time of moulding nearer the surface to be welded, e.g. by means of a magnet.

This second embodiment discloses the provision of metal powder in the material of an element to be connected to a tube wherein the metal powder is concentrated at the time of moulding near the surface to be connected to the tube by means of a magnet. Also in this case there is no disclosure of fixing means having coupling parts of thermoplastic material.

The primary object of the present invention is to provide a method which, by overcoming the disadvantages of the solutions proposed up to now, enables structural members to be assembled quickly and economically, thus rendering the operation industrial and automated.

The subject of the present invention is a method of the above described kind comprising the steps of providing fixing means consisting of resilient joint fasteners having a concentration of metal fillers of ferromagnetic material, in at least the surface portions of said coupling parts, said fasteners having been obtained by moulding in a mould for thermoplastic material, with the use of a thermoplastic polymer composition including said metal fillers and by concentrating said fillers in the surface portions of said coupling parts by subjecting the thermoplastic material while molten within the mould to a magnetic field having an intensity and direction arranged to cause the migration of the fillers to the surface portions of the coupling parts,

incorporating said fasteners In the structural members intended to be connected together,

assembling the structural members with the coupling parts of said fasteners in position of mutual coupling, and

bringing the thermoplastic material of the coupling parts of said fasteners in said surface portions to the melting point by inductive heating of said portions.

The fixing means are incorporated in the structural members intended to be connected together and are made by moulding, preferably injection moulding, with the use of a thermoplastic polymeric composition including the conductive fillers.

The thermoplastic material constituting the fixing means may conveniently be selected from the group consisting of acetal, polyamide and polyester resins.

In the method according to the invention the fixing means, include fillers of ferromagnetic material and their concentration in the surface portions of the fixing means is obtained by subjecting the molten thermoplastic material including the ferromagnetic fillers, within the mould and during injection, to an orientable magnetic field having an intensity and direction such as to cause to the ferromagnetic fillers to migrate into the surface portions of the coupling surfaces of the fixing means themselves.

The fillers used may be in the form of fibres, powders or particles and are preferably constituted by powdered iron derivatives.

It is naturally desirable for the electrically-conductive ferromagnetic fillers to be concentrated in the surface portions of the coupling surfaces of the fixing means, so as to obtain surface portions with high conductivities which may easily be melted by inductive heating. The concentration of the conductive fillers adjacent the surface prevents the complete fusion of the fixing means.

The above-described method for producing the fixing means does not harm the basic properties of the plastics matrix.

Synthetic-thermoplastic-resin-based fixing means are obtained, for use in the method according to the invention, which have having a concentration of conductive ferromagnetic fillers, in the surface portions of their coupling surfaces such as to render the mass of material in the surface portions electrically conductive. The fixing means are of the resilient-joint (fastener) type.

In order to assemble structural members provided with the fixing means, the latter are positioned in coupling or fastening relationship and are exposed to high-frequency radiation, preferably in the radio frequency range, to cause the fusion of the contact zones and thus cause their permanent interlocking after their subsequent solidification. Robotised equipment of the type currently in use for welding metal parts may be used for the radio-frequency irradiation. The mechanical strength of the joints achieved may be checked by non-destructive automatic diagnostic systems.

The method of the invention may be used for the connection of structural members of plastics material or for connecting a member of plastics material to metal components. In the latter case, the fixing means may be incorporated as inserts in the metal component.

## Claims

1. A method for the assembly of structural members of plastic material, constituting component parts of a motor vehicle body by means of resilient joint fasteners having coupling parts of thermoplastic material comprising the steps of:

   providing resilient joint fasteners having a concentration of metal fillers of ferromagnetic material, in at least the surface portions of said coupling parts, said fasteners having been obtained by moulding in a mould for thermoplastic material, with the use of a thermoplastic polymer composition including said metal fillers and by concentrating said fillers in the surface portions of said coupling parts by subjecting the thermoplastic material while molten within the mould to a magnetic field having an intensity and direction arranged to cause the migration of the fillers to the surface portions of the coupling parts,

   incorporating said fasteners in the structural members intended to be connected together,

   assembling the structural members with the coupling parts of said fasteners in position of mutual coupling, and

   bringing the thermoplastic material of the coupling parts of said fasteners in said surface portions to the melting point by inductive heating of said portions.

2. A method according to claim 1, wherein the fillers are in the form of fibres, powders or particles.

3. A method according to claim 1, wherein the fillers are powdered iron derivatives.

4. A method according to claim 1, wherein the thermoplastic material constituting the fixing means is selected from the group of acetal, polyamide and polyester resins.

## Revendications

1. Procédé d'assemblage pour éléments de structure en matière plastique, constituant des parties constitutives d'une carrosserie de véhicule automobile, à l'aide d'organes d'assemblage formant joints élastiques qui possèdent des éléments d'accouplement en matière thermoplastique, comprenant les phases consistant à :

   prévoir des organes d'assemblage formant joints élastiques contenant une concentration de charges métalliques faites d'une matière ferromagnétique dans au moins les portions superficielles des éléments d'accouplement, lesdits organes d'assemblage ayant été obtenus par moulage dans un moule pour matières thermoplastiques, en utilisant une composition polymère thermoplastique qui contient lesdites charges métalliques, et par concentration desdites charges dans les portions superficielles desdits éléments d'accouplement, qui est obtenue en soumettant la matière thermoplastique, alors qu'elle est fondue dans le moule, à un champ magnétique qui possède une intensité et une direction calculées pour faire migrer des charges vers les portions superficielles des éléments d'accouplement,

   incorporer lesdits organes d'assemblage dans les éléments de structure qu'il s'agit d'assembler l'un à l'autre,

   assembler les éléments de structure avec les éléments d'accouplement desdits organes d'assemblage en position d'accouplement réciproque, et

   porter la matière thermoplastique des éléments d'accouplement desdits organes d'assemblage, dans lesdites portions superficielles, à la température de fusion en chauffant lesdites portions par induction.

2. Procédé selon la revendication 1, dans lequel les charges sont présentées sous la forme de fibres, poudres ou particules.

3. Procédé selon la revendication 1, dans lequel les charges sont des dérivés du fer en poudre.

4. Procédé selon la revendication 1, dans lequel la matière thermoplastique qui constitue les moyens de fixation est choisie dans le groupe des résines acétal, polyamide, polyester.

**Patentansprüche**

1. Verfahren zum Verbinden von Konstruktionselementen aus Kunststoff, die Komponenten einer Kraftfahrzeugkarosserie bilden, mit Hilfe von elastischen Fugenbefestigern mit Verbindungsteilen aus thermoplastischem Werkstoff,

mit den Verfahrensschritten:

daß zumindest in den Oberflächenbereichen der Verbindungsteile der Fugenbefestiger eine Konzentration von metallischen Füllstoffen aus ferromagnetischem Material vorgesehen wird, wobei die Befestiger durch Ausformen, insbesondere Spritzgießen in einer Form für thermoplastische Materialien unter Verwendung einer die metallischen Füllstoffe enthaltenden thermoplastischen Polymerkomposition sowie dadurch gewonnen wurden, daß die Füllstoffe in den Oberflächenbereichen der Verbindungsteile konzentriert wurden, indem das thermoplastische Material während des Schmelzzustands in der Form einem Magnetfeld ausgesetzt wurde, dessen Intensität und Richtung so gewählt sind, daß sie eine Wanderung der Füllstoffe zu den Oberflächenbereichen der Verbindungsteile hevorrufen,

daß die Fugenbefestiger in die miteinander zu verbindenden Konstruktionselemente eingesetzt werden,

daß die Konstruktionselemente mit den Verbindungsteilen der Fugenbefestiger in der gegenseitigen Verbindungsposition zusammenfügt werden, und

daß das thermoplastische Material der Verbindungsteile der Fugenbefestiger in den genannten Oberflächenbereichen durch induktives Erhitzen dieser Bereiche auf den Schmelzpunkt erwärmt wird.

2. Verfahren nach Anspruch 1, bei dem die Füllstoffe die Form von Fasern, Pulver oder Partikeln haben.

3. Verfahren nach Anspruch 1, bei dem die Füllstoffe pulverisierte Eisenderivate sind.

4. Verfahren nach Anspruch 1, bei dem das die Befestigungsmittel bildende thermoplastische Material aus der Gruppe der Azetal-, Polyamid- oder Polyesterharze ausgewählt ist.